(19) Europäisches Patentamt
European Patent Office
Office européen des brevets

(11) EP 3 121 586 B1

(12) EUROPEAN PATENT SPECIFICATION

(45) Date of publication and mention
of the grant of the patent:
03.07.2019 Bulletin 2019/27

(51) Int Cl.:
G01N 3/34 (2006.01)          G01N 3/32 (2006.01)
G01N 3/38 (2006.01)

(21) Application number: 14886058.8

(22) Date of filing: 19.03.2014

(86) International application number:
PCT/JP2014/057437

(87) International publication number:
WO 2015/140945 (24.09.2015 Gazette 2015/38)

(54) **FATIGUE TESTER**

ERMÜDUNGSTESTER

TESTEUR DE FATIGUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.01.2017 Bulletin 2017/04**

(73) Proprietor: **Hitachi, Ltd.
Chiyoda-ku
Tokyo 100-8280 (JP)**

(72) Inventor: **UEKI Yosuke
Tokyo 100-8280 (JP)**

(74) Representative: **Mewburn Ellis LLP
City Tower
40 Basinghall Street
London EC2V 5DE (GB)**

(56) References cited:
**WO-A1-99/57435            JP-A- H0 854 331
JP-A- H0 854 331          JP-A- 2000 097 800
JP-A- 2000 097 800        JP-A- 2004 020 472
JP-A- 2004 184 220        JP-A- 2007 017 288
JP-A- 2012 149 979        JP-A- 2012 149 979
US-A1- 2009 277 266**

# Description

## Technical Field

The present invention relates to fatigue testing apparatuses and particularly provides a fatigue-strength evaluating apparatus of resin materials, etc.

## Background Art

Recently, cases in which resin materials are employed in industrial products as strength members are increasing. For example, in blades which are main constituent members of a blade wheel mounted on a wind power generator, resin materials are often used as composite materials such as glass-fiber reinforced resins or carbon-fiber reinforced resins. Other than that, cases in which these composite materials are used in bodies and chassis of automobiles and airplanes are increasing. These products are exposed to dynamic repetitive load in usage environments. Therefore, it is extremely important in terms of product design to find out the fatigue strength of the materials used in these products.

In acquisition of the fatigue strength of the materials, generally, a hydraulically-driven-type fatigue testing machine is used. This repeatedly imparts tension, compression, or bending deformation to a test piece by a hydraulic actuator and causes fatigue failure, thereby acquiring fatigue strength. The fatigue testing machine of this type is suitable for imparting large load or large displacement, but has a maximum test frequency of about several tens of Hz to 100 Hz. Since the above described products sometimes require to find out the fatigue strength that reaches a long-life range such as over $10^7$ times, it is desired to employ a high-speed testing apparatus in this case.

As a high-speed testing apparatus, there is an ultrasonic-wave fatigue testing machine. This testing apparatus is an apparatus which carries out a fatigue test at a frequency of several tens of kHz by using ultrasonic-wave vibrations and can carry out the fatigue test extremely quickly. However, this apparatus is a testing apparatus developed mainly for evaluating metal materials having high elastic moduli than those of resin materials, and therefore cannot generate large displacement. Therefore, this is not suitable for a test of the materials having comparatively low elastic coefficients such as resin materials. Moreover, if deformation is repeatedly caused at high speed in a resin material, heat is generated along with viscosity loss, and the temperature of a test piece is increased by that. The temperature of the test piece sometimes affects fatigue strength and is therefore desired to be a temperature considering the usage environment of the material. Even in a case in which a fatigue test of uniaxial repetitive tension/compression is carried out at about several tens of Hz by using the above described hydraulically-driven-type fatigue testing machine, the temperature of the test piece sometimes becomes a high-temperature state exceeding 100°C depending on the thermal conductivity of the material or the shape of the test piece. Therefore, in order to carry out a test at high speed while suppressing heat generation, it is effective to employ a bending fatigue test. The heat generation caused by the repetitive deformation of the material is proportional to the amount of strain generated in the material to the second power. In the uniaxial tension/compression test, largest strain is uniformly generated across the cross section of the test piece; on the other hand, in the bending fatigue test, largest strain is generated only at an uppermost surface part of the test piece, and strain at the position of a neutral axis is zero. Therefore, even in a case in which the same stress amplitude is expected, the amount of heat generation in the entire test piece can be significantly reduced. However, a testing apparatus capable of generating large displacement in order to impart bending deformation to a test piece is required in a bending fatigue test. Generally, there is a trade-off relation between the amount of displacement of a fatigue testing machine and a test frequency. For example, if a plane bending fatigue test described in JIS-K7119 is expected, it is desired to ensure testing machine displacement (stroke) of several mm order.

According to the above background, in order to quickly carry out a fatigue test of a resin material, realization of a testing apparatus capable of imparting repetitive bending to a test object at high speed is desired. For example, an apparatus according to PTL 1 enables imparting of large deformation with comparatively small vibrating force by attaching a cantilever-like test body to a vibrating device and carrying out vibrations at a resonant frequency of the test object.

JP 2000-097800 proposes a plane bending test machine which applies a uniform bending moment. JP 2012-149979 proposes a fatigue testing machine which can determine the presence of a crack in the tested sample. JPH08-54331 proposes a test apparatus which resonates a test piece. WP99-57435 proposes a sensor for a wind turbine blade which estimates the both of an edge-wise and flap-wise natural frequency.

## Citation List

### Patent Literature

PTL 1: Japanese Patent Application Laid-Open No. 2010-121939

## Summary of Invention

### Technical Problem

In a test of a method in which a test piece is resonated by a vibrating device in this manner (hereinafter, referred to as resonant bending test), bending stress is loaded on the evaluation site in a test piece by resonance. In that process, inertia force acts not only on the test piece, but also on an entire vibration system including fixation jigs, bolts, etc. Therefore, for example, even when a load measuring device such as a load cell is inserted in the vibration system, it is difficult to directly measure the bending stress that acts on the evaluation site of the test piece. Generally, in designing of an industrial product expecting fatigue damage caused by repetitive load, a fatigue graph acquired under a condition of a constant amplitude is often used. Therefore, when a fatigue test is carried out, it is extremely important to maintain constant load that is loaded on a test piece. However, since conventional apparatuses which carry out resonant bending tests are not provided with a load measuring means, it has been difficult to create a fatigue graph with a condition of a constant stress amplitude required for actual designing.

It is an object of the present invention to provide a fatigue testing apparatus that effectively finds out the fatigue strength of a resin material, etc.

Solution to Problem

In order to solve the above issue, a fatigue testing apparatus according to claim 1 is provided, and a method according to claim 9 is provided.

Advantageous Effects of Invention

According to the present invention, a fatigue testing apparatus that effectively finds out the fatigue strength of a resin material can be provided.

Brief Description of Drawings

FIG. 1 is a configuration diagram of a fatigue testing apparatus according to an embodiment.
FIG. 2 is an operation chart of the fatigue testing apparatus according to the embodiment.
FIG. 3 shows an example of the shape of a general test piece.
FIG. 4 shows an example of the shape of a test piece preferred in the fatigue testing apparatus according to the embodiment.

Description of Embodiments

Modes for carrying out the present invention will be described by using below drawings and mathematical formulas. Note that the below descriptions are merely examples and are not meant to limit embodiments of the present invention to the below-described specific modes.

First Embodiment

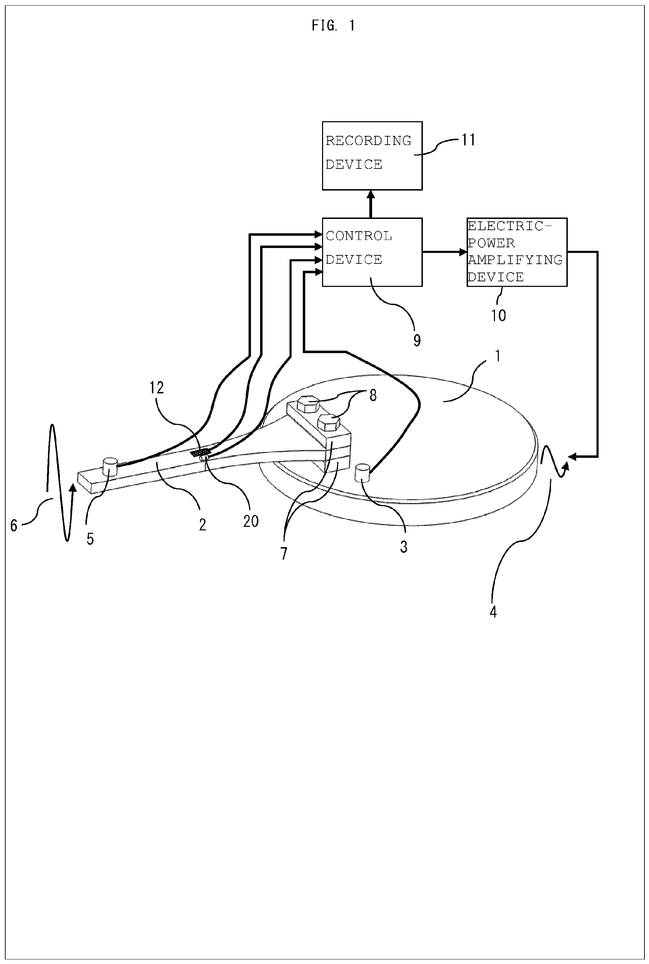

FIG. 1 shows a configuration diagram of a resonant bending fatigue testing apparatus in the present embodiment. A test piece 2 serving as a test object is fixed like a cantilever to a movable part 1 of an electromagnetic vibrator by fixation jigs 7 and fixation bolts 8. When the test piece 2 is attached in this manner and subjected to sine-wave vibrations by the vibrator, bending deformation can be imparted to the test piece 2. Acceleration sensors are attached to the accelerator movable part 1 and a free-end-side of the test piece 2, respectively. The sensor 3 in the vibrator-movable-part side is used for measuring vibration acceleration signals 4, and the sensor 5 in the free-end side is used for measuring response acceleration signals 6. The vibration acceleration signals 4 and the response acceleration signals 6 are taken into a control device 9. The vibration acceleration signals 4 and the response acceleration signals 6 are always subjected to fast Fourier transformation (FFT) analysis so that the phase difference between both of the signals can be monitored. Note that, herein, if a vibration frequency is changed based on feedback control which always causes the phase difference to be 90°, a test which always follows the natural frequency of the test piece 2 can be carried out. Note that vibration waveforms generated by the control device 9 are amplified by an electric-power amplifying device, and the electromagnetic vibrator is driven. Moreover, the signals from the sensors, which are taken into the control device 9, and test frequencies are configured to be transmitted to and recorded in a recording device 11 so that changes in parameters during a test can be checked after the test is finished. Note that the control device 9 and the recording device 11 may be formed by a combination of an electronic computing system such as a personal computer and software.

In the present invention, since a resin material is repeatedly deformed at high speed, heat generation cannot be avoided. Generally, compared with metal materials, resin materials have large changes in physical properties with respect to temperature changes. Since the natural frequency of an object is changed depending on the rigidity of itself (see [Formula 1]), even in a case of the same test piece, when the temperature is changed during a test, the natural frequency may be changed. Moreover, it is generally known that the rigidity of resin materials is significantly reduced also by fatigue damage. However, by providing the function to follow the natural frequency as described above, large deformation can be always applied to the test piece with comparatively small vibration force even when temperature changes or rigidity changes of the test piece are varied during the test.

Herein, test conditions for carrying out a test with a constant stress amplitude will be described by using mathematical formulas. The natural frequency f of a certain object and the rigidity E thereof have a relation shown in Mathematical Formula 1.

[Formula 1]

$$f^2 = c_1E$$

"$c_1$" is a proportional constant, and Mathematical Formula 1 expresses that the natural frequency to the second power is proportional to the rigidity. Note that, in the present invention, the rigidity E may be replaced by a bend elastic coefficient of the test piece. Next, the response acceleration of the free-end side of the test piece which is in a resonant state is assumed to be "a". Herein, displacement d at a response acceleration measured position in this case can be expressed by Mathematical Formula 2.

[Formula 2]

$$d = a/(2\pi f)^2$$

If the strain at an evaluation site of the test piece which is in the resonant state is assumed to be $\varepsilon$, it has a proportional relation to the displacement d and therefore can be described as

[Formula 3]

$$\varepsilon = c_2 d.$$

The stress $\sigma$ at the evaluation site in this case can be expressed as

[Formula 4]

$$\sigma = \varepsilon E = c_2 a/(2\pi f)^2 \cdot f^2/c_1 = c_3 a$$

according to Mathematical Formulas 1 to 3. Herein, "$c_3$" is a proportional constant and is

[Formula 5]

$$c_3 = c_2/(4\pi^2 c_1).$$

Based on Mathematical Formula 4, it can be understood that the stress does not depend on the rigidity of the test piece, but can be uniquely obtained only by the response acceleration a measured by the acceleration sensor. In other words, even if the rigidity of the test piece is changed during the test, as long as the response acceleration signals can be monitored, the stress amplitude loaded on the test piece during the test can be found out by using the relation of Mathematical Formula 4.

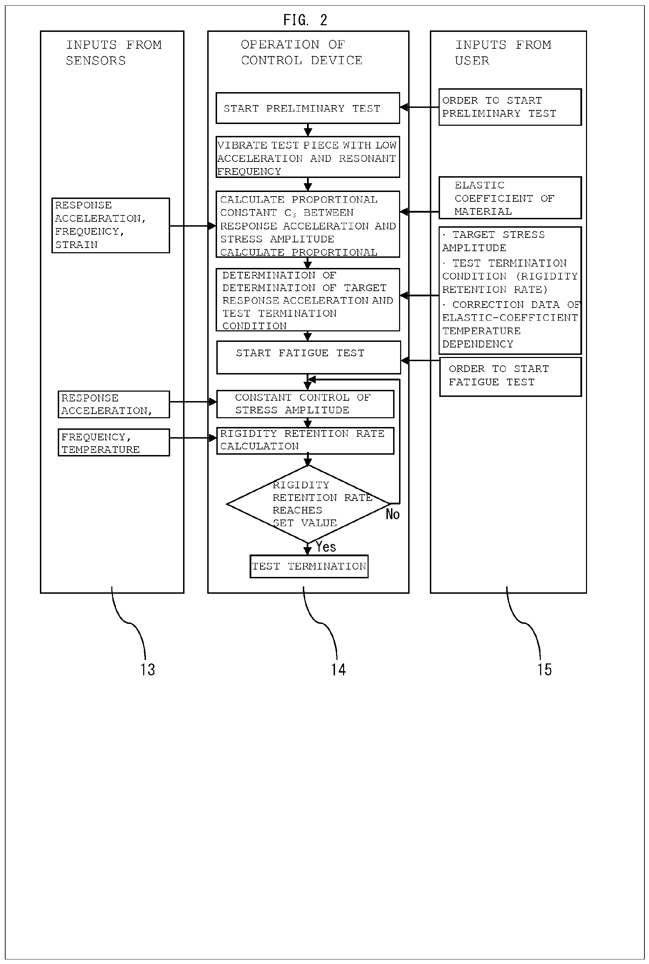

FIG. 2 shows an operation chart of the fatigue testing apparatus of the present invention. It is shown by sorting into largely three items, i.e., input contents 13 from the sensors, operation steps 14 of the control device, and input contents 15 from a user. In the invention, the stress amplitude is estimated from the response acceleration signals; however, in order to acquire the absolute value of the stress amplitude, the proportional constant (s) $c_3$ or $c_1$ and $c_2$ shown in Mathematical Formula 4 have to be found out. The present embodiment is configured to paste a strain gauge 12 on the evaluation site of the test piece in advance so that the strain $\varepsilon$ (Mathematical Formulas 3 and 4) generated in the test piece can be directly measured. However, since the resin material serving as an object in the present invention has a small elastic coefficient compared with a metal material, large strain that exceeds the measurement range of the strain gauge 12 is generated in the evaluation site. Moreover, since temperature drift in the strain gauge output value occurs due to heat generation, it is difficult to use, in evaluation, the strain gauge value output while a fatigue test is being carried out. Therefore, prior to start of the fatigue test, a resonant bending test (preliminary test) is carried out with vibration acceleration which is sufficiently smaller than that in the fatigue test. The vibration acceleration level in this case is preferred to be set in a strain range in which the test piece is not damaged and strain measurement by the strain gauge can be stably carried out. The stress amplitude $\sigma$ is obtained from the strain $\varepsilon$, which has been obtained from this preliminary test, and the bend elastic coefficient E of the material, which has been separately acquired. Moreover, since the response acceleration a is also measured in the preliminary test, the proportional constant $c_3$ (Mathematical Formula 4) is obtained. Thereafter, the stress amplitude can be estimated only by the proportional constant $c_3$, which has been obtained by this preliminary test, and the response acceleration a, which is measured by the acceleration sensor. The control device 9, which is included in the testing apparatus described in the present embodiment, has a function, when a target stress amplitude and the physical properties of the test piece are input after the test piece is attached, to automatically carry out the above described preliminary test and calculate the proportional constant $c_3$ and to adjust the vibration acceleration level so as to achieve a response acceleration level corresponding to the target stress amplitude. By this function, a tester can carry out a fatigue test at a predetermined stress amplitude level without carrying out cumbersome calculations.

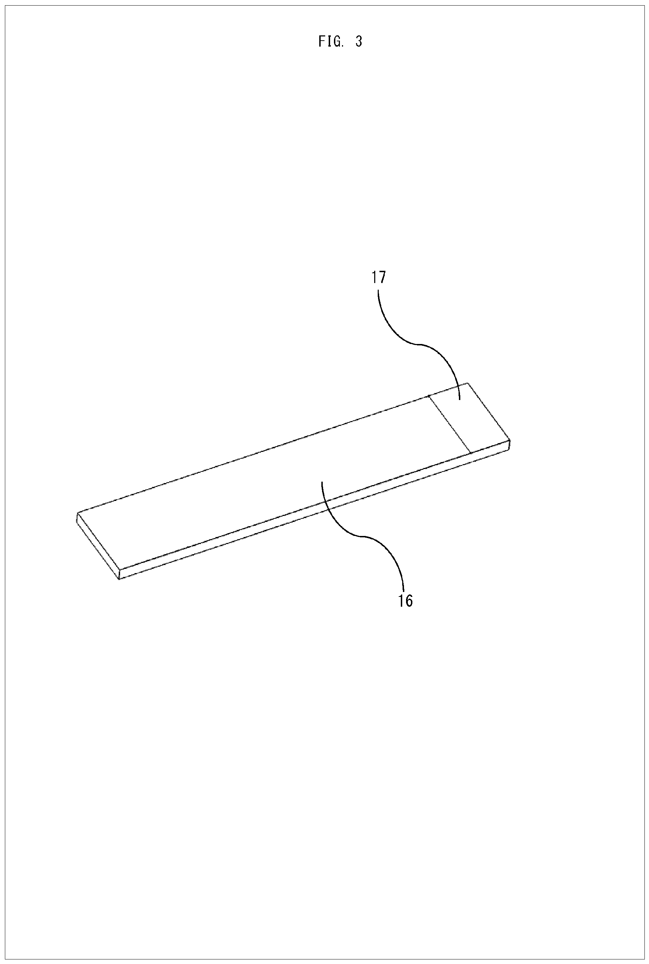

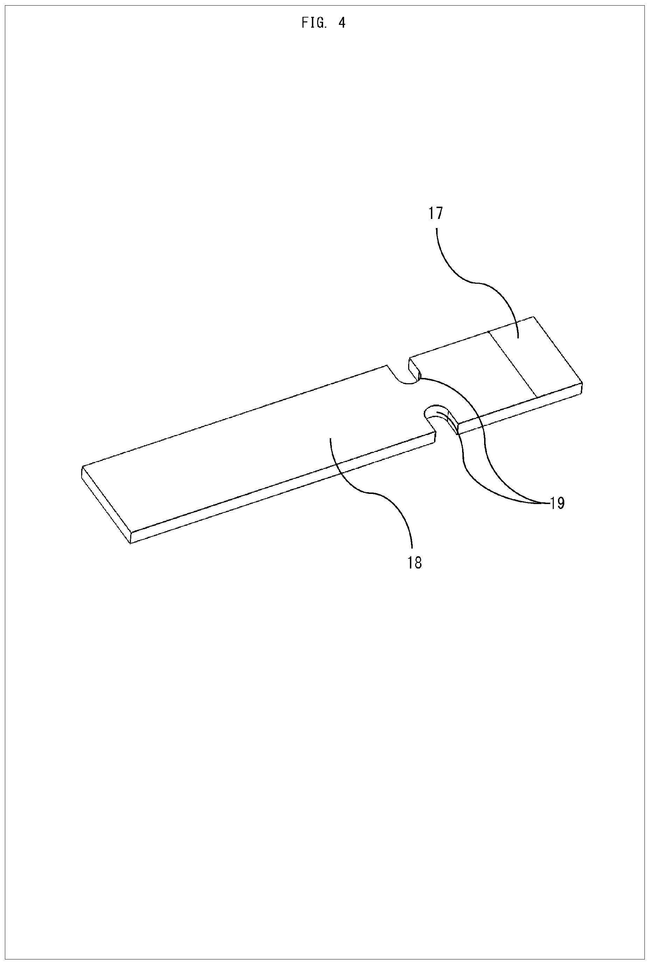

Note that, in application of the present invention, the shape of the test piece is desired to be a shape in which largest stress is generated at a position somewhat distant from the fixation part. For example, a straight-shape test piece 16 as shown in FIG. 3 is employed, a resonant bending test is carried out, and, as a result, it is obvious that largest stress is generated at an end of a test-piece fixation part 17. It is difficult to paste the strain gauge onto such a part, and such a part serves as a stress singular field; therefore, it is difficult to quantitatively obtain an actual stress value. Therefore, if the shape of the test piece is a half-dumbbell test piece 2 as shown in FIG. 1 or a notched test piece 18 as shown in FIG. 4, a largest-stress generated position in the resonant bending test can be caused to be a position distant from the test-piece fixation part.

When a resonant bending fatigue test is carried out by using the fatigue testing apparatus of the present invention, rigidity reduction of the test piece due to fatigue damage occurs. As shown in Mathematical Formula 1, the rigidity of the test piece is proportional to the natural frequency to the second power. In the present invention, since the natural frequency of the test piece is always followed, a test frequency is reduced along with progress of fatigue damage. Therefore, when the test frequency is monitored, the fatigue damage during the test can be quantitatively evaluated. The control device of the present invention is provided with a function to automatically calculate and display relative rigidity changes (rigidity retention rate) based on Mathematical Formula 4 from natural frequency changes. Moreover, an arbitrary rigidity retention rate can be set in advance, and the test can be terminated at the point when the rigidity retention rate calculated from the natural frequency changes reaches the set value.

However, the rigidity of the test piece is changed also depending on, in addition to fatigue damage, the temperature of the test piece. As described above, compared with uniaxial tension/compression test, the bending method employed in the present invention can reduce the entire amount of heat generation. However, depending on the repetitive frequency, the strain level, and the temperature dependency of the elastic coefficient of the material employed in the test, unignorable rigidity changes may be generated by heat generation.

Therefore, the present apparatus is provided with a function to correct rigidity changes caused by temperature changes of the test piece. First, the relation between the bending elastic modulus of the material and temperatures is checked in advance. In this process, it is not necessarily required to find out the absolute value of the bending elastic modulus, and only a relative value is required to be found out. For example, when natural frequency changes of the test piece are checked while the temperature of the test piece is changed by a constant-temperature bath or the like by utilizing the present testing apparatus, the temperature dependency of the relative elastic modulus can be checked based on Mathematical Formula 1.

Then, when a fatigue test is carried out, the temperature of the test piece is measured. As a means to measure the temperature, a method of pasting a thermocouple 20 to the test-piece evaluation site is the easiest and costs low. However, a non-contact-type infrared thermometer or the like may be used. The infrared thermometer is expensive compared with a thermocouple and requires preliminary preparation such as emittance correction, but does not require consideration of cable wiring, etc. since the temperature can be measured without contact. The amount of the rigidity change of the test piece caused by the temperature change can be calculated by using the temperature measured herein and the above described temperature dependency data of the test-piece rigidity. When this is subtracted from the amount of the apparent rigidity change measured during the fatigue test, the amount of the rigidity reduction caused only by fatigue damage can be obtained. The control device of the present invention is provided with the above described temperature correcting function and can always automatically calculate the rigidity reduction caused only by fatigue damage.

Note that, in a case in which an environmental-temperature controlling device such as a constant-temperature bath is used, the influence of the heat generation caused repeatedly by strain can be eliminated by using the temperature sensor such as the above described thermocouple 20 or a radiation thermometer as a control point and applying environmental temperature control that causes the test piece temperature to be constant. In this process, it is desired to carry out sufficient preliminary research so that a temperature controlling device having sufficiently high responsiveness capable of following temperature changes of the test piece can be used.

According to a fatigue-strength evaluating method in the present embodiment, by utilizing the bending deformation load on the test piece caused by resonance, a fast fatigue test in which the stress amplitude is constant can be carried out with respect to a resin material.

Second Embodiment

A second embodiment will be described below. Note that the description of the parts redundant with the first embodiment will be omitted. In the first embodiment, as a strain measuring means in the preliminary test, the strain gauge 12 directly pasted on the evaluation site is used. Since this method directly measures the strain, highly-accurate stress amplitude calculation can be expected. On the other hand, since the strain gauge has to be directly pasted on the test piece, test preparation takes labor. Moreover, if there is misalignment of the pasted position or angle of the strain gauge, an error may occur in the estimated value of the stress amplitude. Therefore, the strain at the evaluation site may be estimated from the displacement at the response acceleration measurement point calculated by Mathematical Formula 2. In the present invention, as described in the first embodiment, the test piece having a special shape such as a half-dumbbell shape or a notched shape is used, and the cross-sectional shape thereof is not uniform. Therefore, it is difficult to obtain the strain of the evaluation site from the amount of displacement at a distal end of the test piece by simple calculations in terms of material mechanics. Therefore, by using numerical analysis such as a finite element method, the relation between the amount of displacement at the distal end of the test piece and the strain of the evaluation site is obtained in advance. By virtue of this, the strain of the evaluation site and the stress amplitude can be estimated without directly measuring the strain by using the strain gauge. The means of the present embodiment is suitable for a case in which the mass and rigidity of the test piece is sufficiently larger than those of the acceleration sensors and cables, etc. thereof and the material is considered to have homogeneous isotropy or for a case in which non-homogeneity or anisotropy of the material can be sufficiently reflected to an analysis model.

Reference Signs List

1 vibrator movable part
2 half-dumbbell test piece
3 vibration acceleration sensor
4 vibration acceleration waveform
5 response acceleration sensor
6 response acceleration waveform
7 fixation jig
8 fixation bolt
9 control device
10 electric-power amplifying device
11 recording device
12 strain gauge
13 input contents from sensors
14 operation steps of control device
15 input contents from user
16 straight test piece
17 fixation part
18 notched test piece
19 notch
20 thermocouple

**Claims**

1. A fatigue testing apparatus for testing the fatigue of a test piece, the apparatus comprising:

    a vibrator means (1) and a sensor (3) configured to measure vibration acceleration signals (4), the vibrator means being configured to continuously and repeatedly impart a bending deformation to the test piece (2) and fixable to the test piece at one end;
    an acceleration sensor (5) attachable to the test piece at an end opposite to the vibrator means; and
    a strain acquiring means (12) configured to directly measure or calculate a strain, $\varepsilon$, of a fatigue-strength evaluation site of the test piece in a preliminary test,
    the apparatus being **characterized in that**: the sensor and vibrator means are configured to follow a change of a natural frequency, $f$, of the test piece and impart the followed natural frequency to the test piece, and
a control device (9) within the apparatus configured
to control the vibrator means,
to monitor the phase difference between the vibration acceleration signals (4) and response acceleration signals (6) for changing the vibration frequency of the vibrator means (1) based on feedback control which causes the phase difference to be 90°,
and to calculate a stress amplitude, $\sigma$, at the fatigue-strength evaluation site, by using: the strain acquired by the strain acquiring means, and a response acceleration, $a$, obtained from the acceleration sensor in the preliminary test, in equation 1:

$$\sigma = \varepsilon E = \frac{c_2 a}{(2\pi f)^2} \cdot \frac{f^2}{c_1} = c_3 a$$

where E is the rigidity of the test piece or the bend elastic coefficient of the test piece acquired in a test separate to the preliminary test, $c_1$ is a first proportional constant, $c_2$ is a second proportional constant, and $c_3$ is a third proportional constant acquired in the preliminary test;
wherein the strain acquiring means is configured to estimate the strain, $\varepsilon$, of the fatigue-strength evaluation site by using a displacement amplitude at a position of the acceleration sensor in the equation:

$$\varepsilon = c_2 d$$

where d, the displacement amplitude, is calculated using the equation:

$$d = \frac{a}{(2\pi f)^2}.$$

2. The fatigue testing apparatus according to claim 1, wherein the strain acquiring means is a strain gauge provided at the fatigue-strength evaluation site.

3. The fatigue testing apparatus according to any of claims 1 or 2, wherein vibration acceleration of the vibrator means is configured to automatically adjust so that an output of the acceleration sensor is constant.

4. The fatigue testing apparatus according to any one of claims 1 to 3, wherein the acceleration sensor is a free-end-side acceleration sensor attached to a free-end side of the test piece, the apparatus further comprises:

a vibrator-means-side acceleration sensor attached to a movable part of the vibrator means; and
the control device being configured to maintain a constant phase difference between output waveforms of the vibrator-means-side acceleration sensor and the free-end-side acceleration sensor, wherein

the control device is configured to calculate a displacement amplitude at the position of the free-end-side acceleration sensor calculated from an output of the free-end-side acceleration sensor and the natural frequency of the test piece by using the equation:

$$d = \frac{a}{(2\pi f)^2}$$

the control device is configured to calculate the third proportional constant between a strain amplitude obtained from the strain acquiring means and the displacement amplitude by using the equation:

$$c_3 = \frac{c_2}{4\pi^2 c_1}$$

and
the control device is configured to calculate a stress amplitude applied to the fatigue-strength evaluation site by using: the output of the free-end-side acceleration sensor, the proportional constant, and an elastic coefficient of the test piece in equation 1 above;
wherein $d$ is the displacement amplitude, $a$ is the response acceleration, $f$ is the natural frequency, $c_3$ is the third proportional constant, $c_2$ is the second proportional constant, and $c_1$ is the first proportional constant.

5. The fatigue testing apparatus according to any one of claims 1 to 4, comprising a temperature measuring means configured to measure a surface temperature of at least one location of the test piece.

6. The fatigue testing apparatus according to claim 5, wherein the temperature measuring means is a thermocouple.

7. The fatigue testing apparatus according to claim 6, wherein the temperature measuring means is a non-contact-type radiation thermometer.

8. The fatigue testing apparatus according to any one of claims 5 to 7, comprising a temperature controlling device operable to adjust an ambient temperature of the test piece, wherein the temperature controlling device is configured to control the temperature measured by the temperature measuring means to a predetermined target value.

9. A method of testing the fatigue of a test piece, using the fatigue testing apparatus according to any of claims 1 - 8, the method comprising:

continuously and repeatedly imparting a bending deformation to the test piece (2), by the vibrator means (1) which is fixed to the test piece at one end; and
directly measuring or calculating, by the strain acquiring means (12), the strain, $\varepsilon$, of the fatigue-strength evaluation site of the test piece in a preliminary test;

the method being **characterised by** including steps of:

following the change of the natural frequency, $f$, of the test piece and imparting the followed natural frequency to the test piece;
monitoring, by the control device, the phase difference between vibration acceleration signals and response acceleration signals and changing the vibration frequency of the vibrator means based on feedback control which causes the phase difference to be 90°,
calculating, by the control device, the stress amplitude, $\sigma$, by using: the strain $\varepsilon$, acquired by the strain acquiring means, and the response acceleration $a$, obtained from the acceleration sensor (5) which has been attached to the test piece at the end opposite to the vibrator means in the preliminary test, in equation 1:

$$\sigma = \varepsilon E = \frac{c_2 a}{(2\pi f)^2} \cdot \frac{f^2}{c_1} = c_3 a;$$

where $E$ is the rigidity of the test piece or the bend elastic coefficient of the test piece acquired in a test separate to the preliminary test, $c_1$ is a first proportional constant, $c_2$ is a second proportional constant, $a$ is the response acceleration of a free-end of the test piece in a resonant state, and $c_3$ is a third proportional constant acquired in a preliminary test; and

estimating the strain, $\varepsilon$, of the fatigue-strength evaluation site by using a displacement amplitude at a position of the acceleration sensor in the equation:

$$\varepsilon = c_2 d$$

where $d$, the displacement amplitude, is calculated using the equation:

$$d = \frac{a}{(2\pi f)^2}.$$

**Patentansprüche**

1. Ermüdungsprüfvorrichtung zum Überprüfen der Ermüdung eines Prüfstücks, wobei die Vorrichtung Folgendes umfasst:

ein Schwingungserzeugermittel (1) und einen Sensor (3), der zum Messen von Schwingungsbeschleunigungssignalen (4) konfiguriert ist, wobei das Schwingungserzeugermittel konfiguriert ist, an dem Prüfstück (2) kontinuierlich und wiederholt eine Biegeverformung zu erzeugen, und an dem Prüfstück an einem Ende fixierbar ist;

einen Beschleunigungssensor (5), der an dem Prüfstück an einem dem Schwingungserzeugermittel entgegengesetzten Ende anbringbar ist; und

ein Dehnungserfassungsmittel (12), das konfiguriert ist, eine Dehnung, $\varepsilon$, einer Ermüdungsfestigkeitsevaluierungsstelle des Prüfstücks in einer Vorprüfung direkt zu messen oder zu berechnen,

wobei die Vorrichtung **dadurch gekennzeichnet ist, dass** der Sensor und das Schwingungserzeugermittel konfiguriert sind, eine Änderung einer Eigenfrequenz, $f$, des Prüfstücks zu verfolgen und auf das Prüfstück die verfolgte Eigenfrequenz aufzubringen, und

eine Steuervorrichtung (9) innerhalb der Vorrichtung, die für Folgendes konfiguriert ist:

Steuern des Schwingungserzeugermittels, Überwachen der Phasendifferenz zwischen den Schwingungsbeschleunigungssignalen (4) und den Antwortbeschleunigungssignalen (6), um die Schwingungsfrequenz des Schwingungserzeugermittels (1) auf Basis einer Rückkopplungssteuerung zu ändern, die bewirkt, dass die Phasendifferenz 90° ist,

und Berechnen einer Belastungsamplitude, $\sigma$, an der Ermüdungsfestigkeitsevaluierungsstelle durch Verwenden der durch das Dehnungserfassungsmittel erfassten Dehnung und einer vom Beschleunigungssensor in der Vorprüfung erhaltenen Antwortbeschleunigung, $\alpha$, in Gleichung 1:

$$\sigma = \varepsilon E = \frac{c_2 a}{(2\pi f)^2} \cdot \frac{f^2}{c_1} = c_3 a$$

worin E die Steifigkeit des Prüfstücks oder der Biegeelastizitätskoeffizient des Prüfstücks ist, die/der in einer von der Vorprüfung unabhängigen Prüfung erfasst wird, $c_1$ eine erste Proportionalitätskonstante ist, $c_2$ eine zweite Proportionalitätskonstante ist, und $c_3$ eine dritte Proportionalitätskonstante ist, die in der Vorprüfung erfasst werden;

wobei das Dehnungserfassungsmittel konfiguriert ist, die Dehnung, $\varepsilon$, der Ermüdungsfestigkeitsevaluierungsstelle durch Verwenden einer Verlagerungsamplitude an einer Position des Beschleunigungssensors in der folgenden Gleichung zu schätzen:

$$\varepsilon = c_2 d$$

worin $d$, die Verlagerungsamplitude, durch Verwendung der folgenden Gleichung berechnet wird:

$$d = \frac{a}{(2\pi f)^2}.$$

2. Ermüdungsprüfvorrichtung gemäß Anspruch 1, wobei das Dehnungserfassungsmittel ein Dehnungsmessstreifen ist, der an der Ermüdungsfestigkeitsevaluierungsstelle bereitgestellt ist.

3. Ermüdungsprüfvorrichtung gemäß einem der Ansprüche 1 oder 2, wobei eine Schwingungsbeschleunigung des Schwingungserzeugermittels konfiguriert ist, sich automatisch einzustellen, sodass eine Ausgabe des Beschleunigungssensors konstant ist.

4. Ermüdungsprüfvorrichtung gemäß einem der Ansprüche 1 bis 3, wobei der Beschleunigungssensor ein freiendseitiger Beschleunigungssensor ist, der an einer Freiendseite des Prüfstücks angebracht ist,

wobei die Vorrichtung ferner Folgendes umfasst:

einen schwingungserzeugermittelseitigen Beschleunigungssensor, der an einem bewegbaren Teil des Schwingungserzeugermittels angebracht ist; und
wobei die Steuervorrichtung konfiguriert ist, eine konstante Phasendifferenz zwischen Ausgangswellenformen des schwingungserzeugermittelseitigen Beschleunigungssensors und dem freiendseitigen Beschleunigungssensor aufrechtzuerhalten,

wobei die Steuervorrichtung konfiguriert ist, eine Verlagerungsamplitude an der Position des freiendseitigen Beschleunigungssensors zu berechnen, die aus einer Ausgabe des freiendseitigen Beschleunigungssensors und der Eigenfrequenz des Prüfstücks durch Verwendung der folgenden Gleichung berechnet wird:

$$d = \frac{a}{(2\pi f)^2}$$

wobei die Steuervorrichtung konfiguriert ist, die dritte Proportionalitätskonstante zwischen einer von dem Dehnungserfassungsmittel erhaltenen Dehnungsamplitude und der Verlagerungsamplitude durch Verwenden der folgenden Gleichung zu berechnen:

$$c_3 = \frac{c_2}{4\pi^2 c_1}$$

und

wobei die Steuervorrichtung konfiguriert ist, eine an die Ermüdungsfestigkeitsevaluierungsstelle angelegte Belastungsamplitude durch Verwenden der Ausgabe des freiendseitigen Beschleunigungssensors, der Proportionalitätskonstante und eines Elastizitätskoeffizienten des Prüfstücks in obiger Gleichung 1 zu berechnen;
worin $d$ die Verlagerungsamplitude ist, $a$ die Antwortbeschleunigung ist, $f$ die Eigenfrequenz ist, $c_3$ die dritte Proportionalitätskonstante ist, $c_2$ die zweite Proportionalitätskonstante ist, und $c_1$ die erste Proportionalitätskonstante ist.

5. Ermüdungsprüfvorrichtung gemäß einem der Ansprüche 1 bis 4, umfassend ein Temperaturmessmittel, das konfiguriert ist, eine Oberflächentemperatur von mindestens einer Stelle des Prüfstücks zu messen.

6. Ermüdungsprüfvorrichtung gemäß Anspruch 5, wobei das Temperaturmessmittel ein Thermoelement ist.

7. Ermüdungsprüfvorrichtung gemäß Anspruch 6, wobei das Temperaturmessmittel ein kontaktloses Strahlungsthermometer ist.

8. Ermüdungsprüfvorrichtung gemäß einem der Ansprüche 5 bis 7, umfassend eine Temperatursteuervorrichtung, die ausgelegt ist, eine Umgebungstemperatur des Prüfstücks einzustellen,
wobei die Temperatursteuervorrichtung konfiguriert ist, die von dem Temperaturmessmittel gemessene Temperatur auf einen vorbestimmten Zielwert hin zu steuern.

9. Verfahren zur Prüfung der Ermüdung eines Prüfstücks, wobei die Ermüdungsprüfvorrichtung gemäß einem der Ansprüche 1 - 8 verwendet wird, wobei das Verfahren Folgendes umfasst:

kontinuierliches und wiederholtes Aufbringen einer Biegeverformung an dem Prüfstück (2) durch das Schwingungserzeugermittel (1), das an dem Prüfstück an einem Ende fixiert ist; und
direktes Messen oder Berechnen der Dehnung, $\varepsilon$, der Ermüdungsfestigkeitsevaluierungsstelle des Prüfstücks durch das Dehnungserfassungsmittel (12) in einer Vorprüfung;

wobei das Verfahren durch Miteinbeziehung der folgenden Schritte gekennzeichnet ist:

Verfolgen der Änderung der Eigenfrequenz, $f$, des Prüfstücks und Aufbringen der verfolgten Eigenfrequenz auf das Prüfstück;
Überwachen der Phasendifferenz zwischen Schwingungsbeschleunigungssignalen und Antwortbeschleunigungssignalen durch die Steuervorrichtung, und Ändern der Schwingungsfrequenz des Schwingungserzeugermittels auf Basis einer Rückkopplungssteuerung, die bewirkt, dass die Phasendifferenz 90° ist,
Berechnen der Belastungsamplitude, $\sigma$, durch die Steuervorrichtung durch Verwendung der Dehnung $\varepsilon$, die durch das Dehnungserfassungsmittel erfasst wird, und der Antwortbeschleunigung $\alpha$, die von dem Beschleunigungssensor (5) erhalten wird, der an dem Prüfstück an dem dem Schwingungserzeugermittel entgegengesetzten Ende angebracht worden ist, in der Vorprüfung in Gleichung 1:

$$\sigma = \varepsilon E = \frac{c_2 a}{(2\pi f)^2} \cdot \frac{f^2}{c_1} = c_3 a;$$

worin E die Steifigkeit des Prüfstücks oder der Biegeelastizitätskoeffizient des Prüfstücks ist, die/der in einer von der Vorprüfung unabhängigen Prüfung erfasst wird, $c_1$

eine erste Proportionalitätskonstante ist, $c_2$ eine zweite Proportionalitätskonstante ist, $\alpha$ die Antwortbeschleunigung eines freien Endes des Prüfstücks in einem Resonanzzustand ist, und $c_3$ eine dritte Proportionalitätskonstante ist, die in einer Vorprüfung erfasst werden; und

Schätzen der Dehnung, $\varepsilon$, der Ermüdungsfestigkeitsevaluierungsstelle durch Verwenden einer Verlagerungsamplitude an einer Position des Beschleunigungssensors in der Gleichung:

$$\varepsilon = c_2 d$$

worin $d$, die Verlagerungsamplitude, durch Verwendung der folgenden Gleichung berechnet wird:

$$d = \frac{a}{(2\pi f)^2}.$$

## Revendications

1. Appareil de test de fatigue destiné à tester la fatigue d'une pièce à tester, l'appareil comprenant :

   un moyen vibrateur (1) et un capteur (3) configurés de manière à mesurer des signaux d'accélération de vibration (4), le moyen vibrateur étant configuré de manière à communiquer, de manière continue et répétée, une déformation par flexion à la pièce à tester (2) et pouvant être fixé à la pièce à tester au niveau d'une extrémité ;
   un capteur d'accélération (5) pouvant être fixé à la pièce à tester au niveau d'une extrémité opposée au moyen vibrateur ; et
   un moyen d'acquisition de contrainte (12) configuré de manière à mesurer ou à calculer, directement, une contrainte, $\varepsilon$, d'un site d'évaluation de résistance à la fatigue de la pièce à tester dans le cadre d'un test préliminaire ;
   l'appareil étant **caractérisé en ce que** : le capteur et le moyen vibrateur sont configurés de manière à suivre une variation d'une fréquence propre, $f$, de la pièce à tester, et à communiquer la fréquence propre suivie à la pièce à tester ; et
   un dispositif de commande (9) au sein de l'appareil configuré de manière à :

   commander le moyen vibrateur ;
   surveiller la différence de phase entre les signaux d'accélération de vibration (4) et les signaux d'accélération de réponse (6) en vue de modifier la fréquence de vibration du moyen vibrateur (1) sur la base d'une commande de rétroaction qui amène la différence de phase à être de 90°, et
calculer une amplitude de contrainte, $\sigma$, au niveau du site d'évaluation de résistance à la fatigue, en utilisant : la contrainte acquise par le moyen d'acquisition de contrainte, et une accélération de réponse, $a$, obtenue à partir du capteur d'accélération dans le cadre du test préliminaire, dans l'équation 1 :

$$\sigma = \varepsilon E = \frac{c_2 a}{(2\pi f)^2} \cdot \frac{f^2}{c_1} = c_3 a$$

où $E$ est la rigidité de la pièce à tester ou le coefficient d'élasticité en flexion de la pièce à tester acquis dans le cadre d'un test distinct du test préliminaire, $c_1$ est une première constante proportionnelle, $c_2$ est une deuxième constante proportionnelle, et $c_3$ est une troisième constante proportionnelle acquise dans le cadre du test préliminaire ;
dans lequel le moyen d'acquisition de contrainte est configuré de manière à estimer la contrainte, $\varepsilon$, du site d'évaluation de résistance à la fatigue, en utilisant une amplitude de déplacement à une position du capteur d'accélération dans l'équation ci-dessous :

$$\varepsilon = c_2 d$$

où $d$, à savoir l'amplitude de déplacement, est calculée en utilisant l'équation ci-dessous :

$$d = \frac{a}{(2\pi f)^2}.$$

2. Appareil de test de fatigue selon la revendication 1, dans lequel le moyen d'acquisition de contrainte est un extensomètre fourni au niveau du site d'évaluation de résistance à la fatigue.

3. Appareil de test de fatigue selon l'une quelconque des revendications 1 et 2, dans lequel l'accélération de vibration du moyen vibrateur est configurée de manière à s'ajuster automatiquement de sorte qu'une sortie du capteur d'accélération est constante.

4. Appareil de test de fatigue selon l'une quelconque des revendications 1 à 3, dans lequel :

le capteur d'accélération est un capteur d'accélération de côté d'extrémité libre fixé sur un côté d'extrémité libre de la pièce à tester ;
l'appareil comprend en outre :
un capteur d'accélération de côté de moyen vibrateur fixé à une partie mobile du moyen vibrateur ; et
le dispositif de commande étant configuré de manière à maintenir une différence de phase constante entre des formes d'onde de sortie du capteur d'accélération de côté de moyen vibrateur et du capteur d'accélération de côté d'extrémité libre, dans lequel le dispositif de commande est configuré de manière à calculer une amplitude de déplacement à la position du capteur d'accélération de côté d'extrémité libre calculée à partir d'une sortie du capteur d'accélération de côté d'extrémité libre et de la fréquence propre de la pièce à tester, en utilisant l'équation ci-dessous :

$$d = \frac{a}{(2\pi f)^2}$$

le dispositif de commande est configuré de manière à calculer la troisième constante proportionnelle entre une amplitude de contrainte obtenue à partir du moyen d'acquisition de contrainte et l'amplitude de déplacement, en utilisant l'équation ci-dessous :

$$c_3 = \frac{c_2}{4\pi^2 c_1}$$

et
le dispositif de commande est configuré de manière à calculer une amplitude de contrainte appliquée au site d'évaluation de résistance à la fatigue en utilisant : la sortie du capteur d'accélération de côté d'extrémité libre, la constante proportionnelle et un coefficient d'élasticité de la pièce à tester dans l'équation 1 ci-dessus ;
dans laquelle d est l'amplitude de déplacement, a est l'accélération de réponse, f est la fréquence propre, $c_3$ est la troisième constante proportionnelle, $c_2$ est la deuxième constante proportionnelle, et $c_1$ est la première constante proportionnelle.

5. Appareil de test de fatigue selon l'une quelconque des revendications 1 à 4, comprenant un moyen de mesure de température configuré de manière à mesurer une température de surface d'au moins un emplacement de la pièce à tester.

6. Appareil de test de fatigue selon la revendication 5, dans lequel le moyen de mesure de température est un thermocouple.

7. Appareil de test de fatigue selon la revendication 6, dans lequel le moyen de mesure de température est un thermomètre à rayonnement du type sans contact.

8. Appareil de test de fatigue selon l'une quelconque des revendications 5 à 7, comprenant :
un dispositif de régulation de température exploitable de manière à ajuster une température ambiante de la pièce à tester, dans lequel :
le dispositif de régulation de température est configuré de manière à réguler la température mesurée par le moyen de mesure de température à une valeur cible prédéterminée.

9. Procédé de test de la fatigue d'une pièce à tester, au moyen de l'appareil de test de fatigue selon l'une quelconque des revendications 1 à 8, le procédé comprenant les étapes ci-dessous consistant à :

communiquer de manière continue et répétée une déformation par flexion à la pièce à tester (2), par le biais du moyen vibrateur (1) lequel est fixé à la pièce à tester au niveau d'une extrémité ; et
mesurer ou calculer directement, par le biais du moyen d'acquisition de contrainte (12), la contrainte, ε, du site d'évaluation de résistance à la fatigue de la pièce à tester dans le cadre d'un test préliminaire ;
le procédé étant **caractérisé en ce qu'**il inclut les étapes ci-dessous consistant à :

suivre la variation de la fréquence propre, f, de la pièce à tester, et communiquer la fréquence propre suivie à la pièce à tester ;
surveiller, par le biais du dispositif de commande, la différence de phase entre des signaux d'accélération de vibration et des signaux d'accélération de réponse, et modifier la fréquence de vibration du moyen vibrateur sur la base d'une commande de rétroaction qui amène la différence de phase à être de 90° ;
calculer, par le biais du dispositif de commande, l'amplitude de contrainte, σ, en utilisant : la contrainte, ε, acquise par le moyen d'acquisition de contrainte, et l'accélération de réponse, a, obtenue à partir du capteur d'accélération (5) qui a été fixé à la pièce à tester à l'extrémité opposée du moyen vibrateur dans le cadre du test préliminaire, dans l'équation 1 :

$$\sigma = \varepsilon E = \frac{c_2 a}{(2\pi f)^2} \cdot \frac{f^2}{c_1} = c_3 a;$$

où $E$ est la rigidité de la pièce à tester ou le coefficient d'élasticité en flexion de la pièce à tester acquis dans le cadre d'un test distinct du test préliminaire, $c_1$ est une première constante proportionnelle, $c_2$ est une deuxième constante proportionnelle, $a$ est l'accélération de réponse d'une extrémité libre de la pièce à tester dans un état résonnant, et $c_3$ est une troisième constante proportionnelle acquise dans le cadre du test préliminaire ; et
estimer la contrainte, $\varepsilon$, du site d'évaluation de résistance à la fatigue, en utilisant une amplitude de déplacement à une position du capteur d'accélération dans l'équation ci-dessous :

$$\varepsilon = c_2 d$$

où d, à savoir l'amplitude de déplacement, est calculée en utilisant l'équation ci-dessous :

$$d = \frac{a}{(2\pi f)^2} \cdot$$

FIG. 1

EP 3 121 586 B1

## FIG. 2

| INPUTS FROM SENSORS | OPERATION OF CONTROL DEVICE | INPUTS FROM USER |
|---|---|---|
| | START PRELIMINARY TEST | ORDER TO START PRELIMINARY TEST |
| | VIBRATE TEST PIECE WITH LOW ACCELERATION AND RESONANT FREQUENCY | |
| RESPONSE ACCELERATION, FREQUENCY, STRAIN | CALCULATE PROPORTIONAL CONSTANT $C_3$ BETWEEN RESPONSE ACCELERATION AND STRESS AMPLITUDE CALCULATE PROPORTIONAL | ELASTIC COEFFICIENT OF MATERIAL |
| | DETERMINATION OF DETERMINATION OF TARGET RESPONSE ACCELERATION AND TEST TERMINATION CONDITION | · TARGET STRESS AMPLITUDE  · TEST TERMINATION CONDITION (RIGIDITY RETENTION RATE)  · CORRECTION DATA OF ELASTIC-COEFFICIENT TEMPERATURE DEPENDENCY |
| | START FATIGUE TEST | ORDER TO START FATIGUE TEST |
| RESPONSE ACCELERATION, | CONSTANT CONTROL OF STRESS AMPLITUDE | |
| FREQUENCY, TEMPERATURE | RIGIDITY RETENTION RATE CALCULATION | |

RIGIDITY RETENTION RATE REACHES SET VALUE — No

Yes

TEST TERMINATION

13    14    15

14

FIG. 3

FIG. 4

17

18

19

**EP 3 121 586 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000097800 A
- JP 2012149979 A
- JP H0854331 B
- WO 9957435 A
- JP 2010121939 A